# EUROPEAN PATENT APPLICATION

(11) **EP 1 912 157 A1**
(43) Date of publication of application: **16.04.2008**
(21) Application number: 06425688.6
(22) Date of filing: 09.10.2006
(51) Int. Cl.: G06K 9/00

(54) **Digital image processing system for automatically representing surrounding scenes to the driver of a vehicle for driving assistance, and corresponding operating method**

(71) Applicant: MAGNETI MARELLI SISTEMI ELETTRONICI S.p.A., 20011 Corbetta (Milano) (IT)
(72) Inventor: Ghisio, Guido, 10078 Venaria Reale (Torino) (IT)
(74) Representative: Deambrogi, Edgardo

(57) **Abstract**

A system and a method for processing images and representing to the driver of a vehicle scenes (S) representing the surroundings of a vehicle, particularly the sector in front of the vehicle, detected at infrared wavelengths, represent to the driver of the vehicle video images representing the scene (S) detected in the infrared, including at least one panoramic image (I_{PAN}) and at least one enlarged image (I_{MAG}) of an area (A) of the panoramic image (I_{PAN}) according to a predetermined scale factor, in which the centre of the scene is a point (P) of the panoramic image (I_{MAG}).

A processing unit (20) is adapted to recognize in a scene (S) a list of predetermined shapes indicative of attention elements (IC) (pedestrians, moving objects in the vicinity, obstacles in the path), and is arranged to:
- select at least one attention element (IC) in the scene (S) characterized by one of the predetermined shapes on the basis of a predetermined priority criterion, and
- cause the display of an enlarged image (I_{MAG}) in which the centre of the local scene is a point (P) of the panoramic image (I_{PAN}) correlated with the said selected attention element (IC) .

## Description

The present invention relates to the driving assistance systems of a vehicle, and specifically to a system and a method for processing images and representing scenes relating to the surroundings of the vehicle to the driver, particularly for driving assistance in conditions of limited visibility, for the purpose of night vision for example.

More specifically, the invention relates to an image processing and representation system according to the preamble of Claim 1, and an image processing and representation method according to the preamble of Claim 25.

In recent years, the progress achieved in the field of passive safety and the fitting of active safety systems to vehicles have contributed to a considerable improvement in road safety.

In order to achieve a further reduction in dangerous situations and improve driving comfort, driving assistance systems are being developed for assisting the driver in manoeuvres and in all difficult driving situations which may occur on the road, by predicting possible hazard situations.

The preventive safety functions provided by these systems include support to the driver in viewing the surroundings of a vehicle, which is of considerable importance for driving situations in conditions of limited visibility which occur, for example, as driving in adverse atmospheric conditions such as heavy rain or fog, or driving at night.

There are known night vision systems in which a video camera operating in the infrared range captures the scene in front of the vehicle and a display device provided in the passenger compartment, preferably on the dashboard, displays it in order to provide the driver with an aid to vision which is additional to what is possible with lighting systems based on dipped or main-beam headlights and fog lamps.

Such video cameras can be capture devices sensitive to the temperature of objects operating in the far infrared (FIR), which carry out a thermal analysis of the scene, or capture devices operating in the near infrared (NIR), for detecting the infrared radiation reflected from objects illuminated by incident infrared radiation generated by illuminating devices associated with the capture device, possibly connected to radio devices for remote detection such as radar and the like.

One drawback lies in the fact that, although the system enriches the visual perception of the scene, this is converted to an image having the dimensions of the display used on board the vehicle (typically 5", 7", or 10" at the most), thus considerably reducing the benefit of the night vision since the scale of representation of the scene is considerably reduced from the ideal dimensions of the windscreen to the dimensions of the on-board display. Furthermore, the driver does not normally concentrate on the display, but only glances rapidly at it, as in the case of the rear-view mirrors, and therefore some information, such as small elements of the landscape, can be difficult to understand.

This makes it necessary to perform enlargement operations on the scene, by optical or digital methods, while keeping the dimensions of the on-board display unchanged.

Enlarging the display of an image on a display of predetermined dimensions poses the problem of knowing which reference point to use for locating the enlargement.

To require the driver to indicate this reference point manually, for example by means of a joystick or by touching the display screen, or by providing one or more voice commands, and then to require the execution of the enlargement, implies a sequence of operations which are difficult to implement and, in a specific hazard situation of difficulty and uncertainty of perception of the scene outside (at night and/or in adverse atmospheric conditions), may create a substantial degree of danger. Furthermore, for optimal focusing of the images by the driver, the display is located at a certain distance from him, and is therefore difficult to reach in the case of touch screen commands.

Using previously determined solutions for this operation, for example selecting the centre of the image as the reference point, leads in most cases to the elimination from the enlarged display, in an arbitrary way and without connection to the specific spatio-temporal context, of parts of the image which in fact could be significant. An example is the loss of information carried by the peripheral area of the image, which may include images of pedestrians at the roadside waiting to cross or vehicles arriving from intersecting roads, which typically form the attention elements which are less conveniently perceivable by the driver who concentrates on a very narrow angle of observation around the direction of travel of the vehicle.

Similar considerations may arise if we consider, as the reference point for an enlargement, other arbitrary points as an alternative to the geometric centre of the image, for example for enlarging only the right-hand (or left-hand) portion of the image, or of the portion relating to the driver's side or to the side from which vehicles travelling in the opposite direction to the vehicle in question originate.

The object of the present invention is to provide a system and a method for processing images and displaying scenes for the purpose of supporting the vision of the surroundings of the vehicle, which overcomes the drawbacks of the known art by effectively displaying attention elements for safe driving in a scene image, while providing a user-friendly interface for communication with the driver.

According to the present invention, this object is achieved by means of a system having the characteristics claimed in Claim 1, and a corresponding method having the characteristics claimed in Claim 25.

Specific embodiments of the invention are described in the dependent claims.

The present invention also proposes a night vision system for a vehicle according to Claim 48.

Briefly, the present invention is based on the principle of accompanying the operation of displaying an external scene with a continuous processing of the captured images, for the purpose of identifying - by means of special image recognition algorithms - attention elements for driving, indicating potentially dangerous situations or others worthy of attention.

The attention elements consist of obstacles of all kinds located in the path of the vehicle, objects which move with a negative component of relative velocity with respect to the vehicle, and pedestrians on the roadside or moving towards the path of the vehicle, this list being purely exemplary and not exhaustive. In the remainder of the description, unless indicated otherwise, the general terms "obstacle", "element" and "object" are used to denote either inanimate objects such as stationary or moving vehicles, or pedestrians or animals.

After the recognition of an attention element, in other words a source of potential danger, this element becomes the reference for the image enlargement operation. Preferably, the enlargement does not have an excessive scale factor, in order not to deprive the driver of the reference of the scene and the context.

In a preferred embodiment, this automatic enlargement operation, having as a reference elements assessed as requiring attention by an automatic image processing and shape recognition system, can be switched on and off selectively by the driver according to his driving preferences.

Clearly, the system can form part of a more complex driving assistance system, such as a lateral or longitudinal anti-collision driving support system.

If more than one attention element is recognized in an image, the system uses a criterion for selecting the attention element to be taken as the reference point, based on a predetermined priority criterion. The currently preferred embodiment includes a list of attention elements, comprising, in decreasing order of priority: pedestrians; objects having a negative relative velocity component with respect to the vehicle; and obstacles, whether stationary or moving, lying in the path of the vehicle.

If there is a plurality of attention elements in the same image, priority is given to the one having the lowest priority ordinal number, in other words the highest priority, and if there is a plurality of attention elements having the same priority, subordinate priority criteria are predetermined, for example the distance of the elements from the vehicle or their position with respect to the driver's side.

If a predetermined velocity threshold is exceeded, the system is made to automatically execute an enlargement operation in response to the requirement for a detailed view at longer distance.

Further characteristics and advantages of the invention will be revealed more fully in the following detailed description, provided by way of example and without restrictive intent, with reference to the attached drawings, in which:
Figure 1a is a block diagram exemplifying a first embodiment of an image processing and scene representation system, according to the invention;
Figure 1b is a block diagram exemplifying a second embodiment of an image processing and scene representation system, according to the invention; and
Figures 2a, 2b and 2c show, respectively, a scene representing the surroundings of the vehicle, a panoramic video image illustrating the scene, and an enlarged video image of a selected area of the panoramic image.

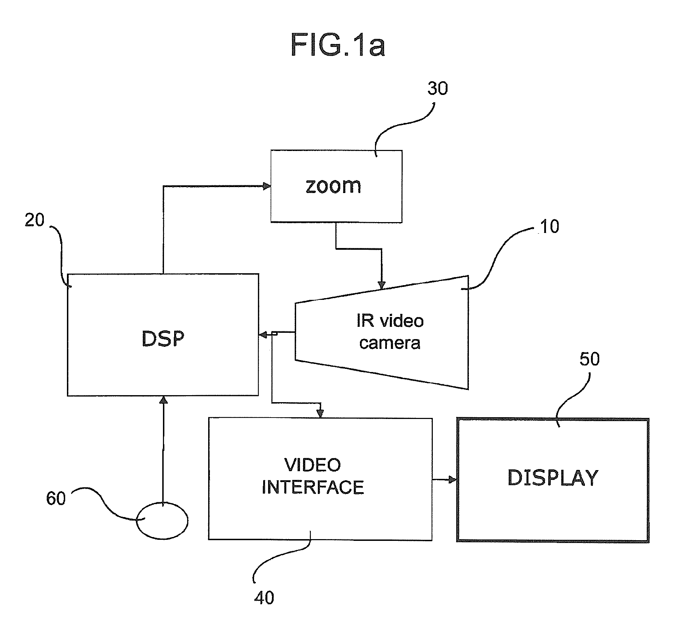

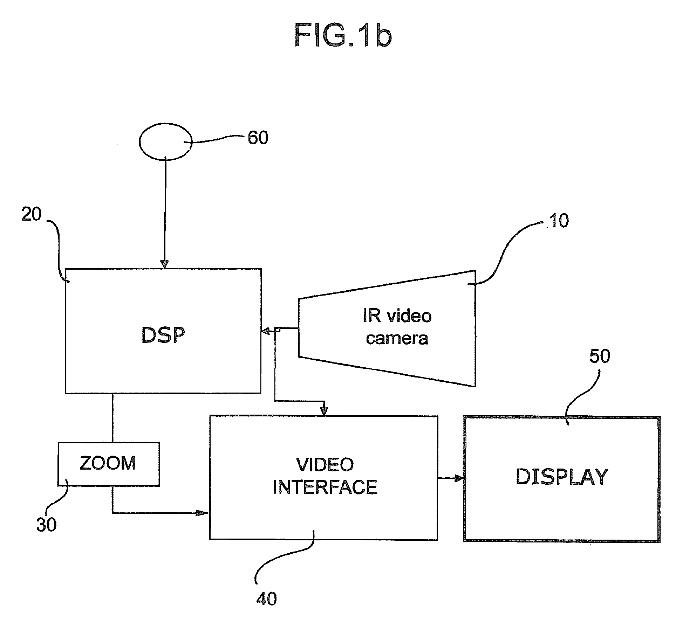

In Figures 1a and 1b, the number 10 identifies a device for detecting the surroundings of the vehicle, and in particular a device for detecting an area in front of the vehicle, for example a capture device such as a video camera or the like, operating at infrared wavelengths.

An infrared video camera (or thermal camera) is an instrument which remotely detects the infrared (on heat) energy emitted by objects and converts it to an electronic signal, which is then processed to produce video images.

The capture device 10 is connected to a processing and control unit 20, preferably in the form of a digital signal processor, to which it supplies image signals representing the external environment of the vehicle in the vehicle's direction of movement, in other words what is known as a forward scene.

In turn, the processing unit 20 is connected to an enlargement control device 30 associated with the capture device, for reducing the framing or varying the focal length of the lens of the capture device.

The capture device 10 is also connected to a video interface module 40 to which it supplies the image signals supplied to the processing unit 20, for converting the image signals from the "thermal" domain to the visible field.

In turn, the video interface module 40 is connected to an on-board display 50 for displaying the image.

Advantageously, a system on/off switch device 60 is provided, for switching the operating mode of the processing unit 20 between a first "natural vision" mode and a second vision mode which is automatically adapted in respect of the field of vision and the enlargement of the scene.

The capture device 10 is preferably positioned on a front surface of the vehicle, for example near the windscreen or in a more forward position on the bonnet or on the front bumper or even on the roof. Without departing from the principles of the invention, it can be supplemented by a further capture device of a wholly similar type, for capturing an area to the side and rear of the vehicle.

The on-board display 50 is, for example, an LCD TFT display, preferably positioned on the dashboard of the vehicle, integrated with an entertainment device provided with a screen positioned on the central column of the dashboard or designed to fold away into a housing in the upper portion, or located within the on-board instrument panel.

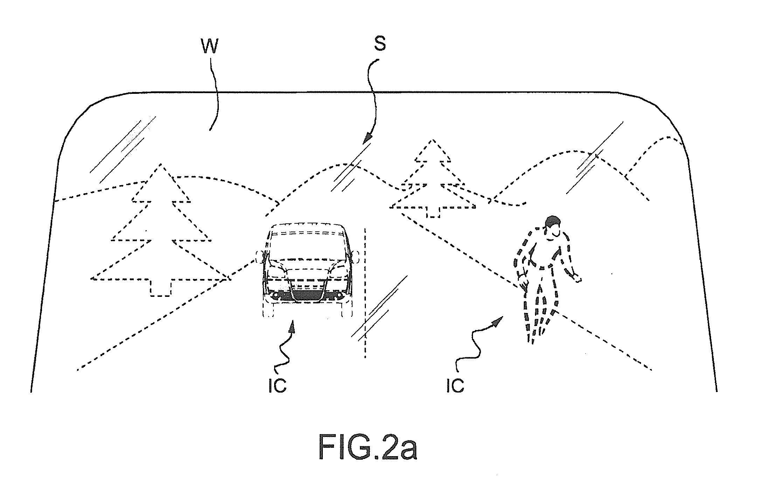

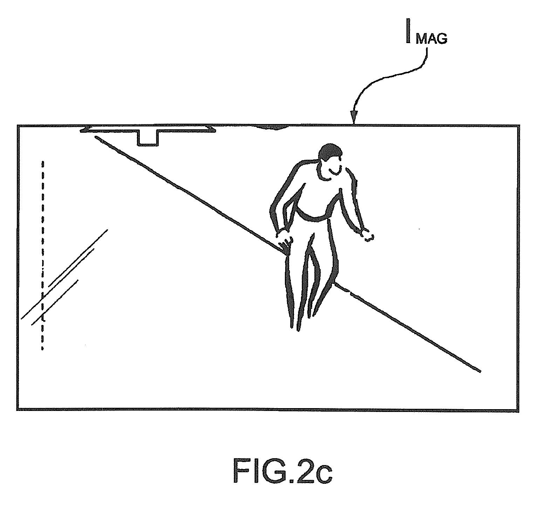

Figure 2a shows a simplified driving scenario S, for example as perceived through the windscreen W of the vehicle, which is shown in broken lines to symbolize conditions of poor visibility, for example due to poor atmospheric conditions, adversely affecting vision in depth, or in conditions of night vision, where it is difficult to perceive the shapes and colours, and the view is limited to the field of vision illuminated by the vehicle's headlights.

The processing unit 20 can acquire the image signals supplied by the device 10 and process the images relating to the driving scenario S of the vehicle. In particular, it is designed to recognize a list of predetermined shapes in the images and to establish which of these meets a predetermined condition of importance on the basis of a specified criterion, selecting one or more attention elements IC of the image and calculating a reference point P of the visual field for a subsequent enlargement operation according to a predetermined relation with the coordinates of the selected element (or elements) IC requiring attention. It is also designed to determine a scale factor of the enlargement, as described more fully below.

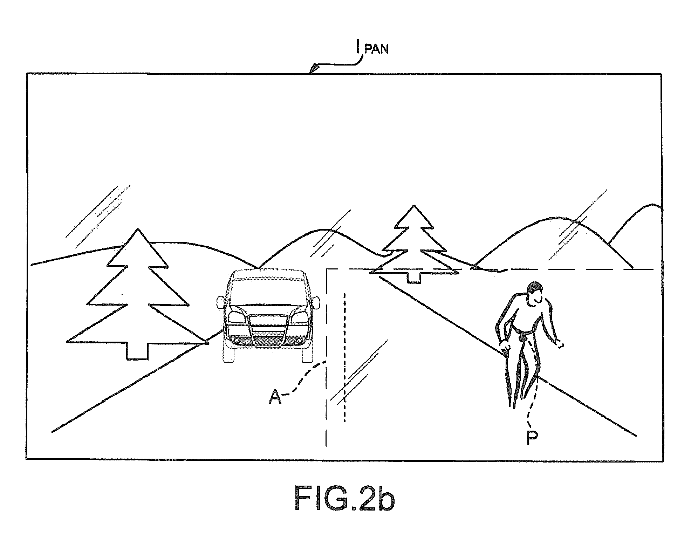

Figures 2b and 2c show, respectively, a panoramic image I_{PAN} of the scene S shown on the display 50, and an enlarged image I_{MAG} of a selected area of the panoramic image I_{PAN}.

According to the invention, the processing unit 20 determines the display of an enlarged image I_{MAG} having as the centre of the local scene a point P of the visual field in the panoramic image correlated with a selected element IC requiring attention.

In a first embodiment (shown in Figure 1a) the processing unit is designed to control the capture device 10, controlling the focal length of its lens to reduce the framing and regulating the axial direction of its field of view, in order to acquire an enlarged image in which the centre of the local scene is the selected point P of the panoramic image I_{PAN}, which is supplied to the video interface module 40 for conversion to a video image and representation to the driver.

In a second embodiment (shown in Figure 1b) the processing unit is designed to store the scene S detected by the capture device 10 and to select a portion of the scene in which the centre is the selected point P of the panoramic image I_{PAN}, which is supplied to the video interface module 40 for conversion to a video image and representation to the driver.

In general, the methods known in systems for recognizing objects from images are used for recognizing the shapes on the list.

The list of predetermined shapes includes regular geometric shapes which can be related to vehicles (bicycles, motor cycles, cars, lorries), pedestrians, and if necessary road infrastructure (bridges, at-grade intersections, road signs) on the basis of their outlines, dimensions and positions.

For example, objects whose recognized outline can be inscribed in a rectangular profile of predominantly horizontal orientation can be related to vehicles, and objects whose recognized outline can be inscribed in a rectangular profile of predominantly vertical orientation can be related to pedestrians.

Attention elements are considered to be pedestrians, objects having a negative component of velocity with respect to the vehicle, and obstacles which lie in, or intersect, the path of the vehicle.

The processing unit 20 classifies the recognized elements IC requiring attention, and selects one of the attention elements in an individual scene on the basis of a predetermined priority criterion.

Preferably, this priority criterion is established in such a way as to assign a progressively decreasing priority to: pedestrians; objects having a negative component of velocity with respect to the velocity of the vehicle; obstacles which lie in, or intersect, the path of the vehicle.

Clearly, the stated order of priority is purely exemplary, and a different order of priority can be assigned to the classes of attention elements without departure from the scope of protection of the invention. In particular, a dynamic order of priority can be provided.

When a plurality of elements IC requiring attention (for example, two of these are shown in Figure 2a, namely a pedestrian on the right-hand side of the road and, in a more distant position, a vehicle approaching in the opposite carriageway) has been selected, and an order of priority has been assigned to them, the processing unit causes the sequential display of enlarged images correlated with the attention elements selected in succession according to the priority criterion.

When there is a plurality of attention elements having the same priority, this results in either the alternating display of enlarged images correlated with the selected attention elements, or the selection of a more important element according to a subordinate priority criterion, such as the distance of the elements from the vehicle (the nearest elements are considered most important), their position with respect to the driver's side (the elements located on the driver's side are considered most important), or the stationary or moving state of the element.

In the display of an enlarged image, the point of the panoramic image correlated with the selected attention element and chosen as the centre of the local scene is a point in the image lying within the outline indicating such an element (for example, the geometric centre of gravity of the rectangular profile circumscribed about the outline), or is calculated by means of a mathematical relation with another point of the image correlated with another attention element having equal priority if the conflict of priority cannot be resolved. In the latter case, the mathematical relation can be, for example, the geometric centre of gravity of the rectangular profile uniting the outlines.

The scale factor of the enlargement should preferably not be so great that the observer (the driver) loses the reference of the scene and the context. Preferably, it is equal to 4. If the system has selected two attention elements having equal priority, the enlargement is such that both are kept within the field of view, for example by using a scale factor of 2.

In the example shown in the figures, the system assigns the higher priority to the pedestrian on the right of the image than to the approaching vehicle (which has a negative component of velocity), and selects as the reference point for the enlargement of the image the point P calculated as the centre of the outline indicating the pedestrian as element IC requiring attention.

Although the system, in the currently preferred embodiment, includes the on/off switch 60 for controlling the switching between a "natural vision" operating mode and a mode of vision which is automatically adapted with respect to the field of view and the enlargement of the scene, it can conveniently be arranged to switch autonomously to the automatic operating mode when the vehicle exceeds a predetermined velocity threshold, in such a way as to automatically execute an enlargement operation and provide a detailed view at longer distance. In this case, the processing unit 20 is designed to cause the display of an enlarged image having as the centre of the local scene the central point of the panoramic image.

Clearly, provided that the principle of the invention is retained, the forms of embodiment and the details of production can be varied considerably from what has been described and illustrated purely by way of example and without restrictive intent, without departure from the scope of protection of the present invention as defined by the attached claims.

## Claims

1. System for processing images and representing to the driver of a vehicle scenes (S) representing the surroundings of a vehicle, particularly the sector in front of the vehicle, detected at infrared wavelengths, comprising display means (40, 50) for representing to the driver of the vehicle video images representing the scene (S) detected in the infrared, and adapted to display at least one panoramic image (I_{PAN}) and at least one enlarged image (I_{MAG}) of an area (A) of the panoramic image (I_{PAN}) according to a predetermined scale factor, in which the centre of the scene is a point (P) of the panoramic image (I_{PAN}),
the system being **characterized in that** it comprises processing means (20) adapted to recognize in a scene (S) a list of predetermined shapes indicative of attention elements (IC), and arranged to:
- select in the scene (S) at least one attention element (IC) **characterized by** one of the said predetermined shapes, and
- cause the display of an enlarged image (I_{MAG}) in which the centre of the local scene is a point (P) of the panoramic image (I_{PAN}) correlated with the said selected attention element (IC).

2. System according to Claim 1, in which the said processing means (20) are arranged to control detector means (10)adapted to detect a scene (S) at infrared wavelengths, in such a way as to acquire an enlarged image (I_{MAG}) in which the centre of the local scene is a point (P) of the panoramic image (I_{PAN}) correlated with the said selected attention element (IC), the acquired image being supplied to display means (40, 50) for conversion to a video image and representation to the driver.

3. System according to Claim 1, in which the said processing means (20) are designed to select a portion of the detected scene (S) in which the centre is a point (P) of the panoramic image (I_{PAN}) correlated with the said selected attention element (IC), the said portion of the scene being supplied to the display means (40, 50) for conversion to a video image and representation to the driver.

4. System according to any one of the preceding claims, in which the said attention elements (IC) comprise pedestrians.

5. System according to Claim 4, in which the shapes indicative of pedestrians comprise outlines which can be inscribed in a rectangular profile of predominantly vertical orientation.

6. System according to any one of Claims 1 to 3, in which the said attention elements (IC) comprise objects having a negative component of velocity with respect to the velocity of the vehicle.

7. System according to Claim 6, in which the shapes indicative of the said objects comprise outlines which can be inscribed in a rectangular profile of predominantly horizontal orientation.

8. System according to any one of Claims 1 to 3, in which the said attention elements (IC) comprise obstacles which lie in, or intersect, the path of the vehicle.

9. System according to Claim 8, in which the shapes indicative of the said obstacles comprise outlines which can be inscribed in a rectangular profile.

10. System according to any one of the preceding claims, in which the said processing means (20) are arranged to classify the said attention elements (IC), the selection of one attention element (IC) from a plurality of attention elements (IC) in a single scene (S) being executed on the basis of a predetermined priority criterion.

11. System according to Claim 10, in which the said priority criterion is such that a progressively decreasing priority is assigned to: pedestrians; objects having a negative component of velocity with respect to the velocity of the vehicle; obstacles which lie in, or intersect, the path of the vehicle.

12. System according to Claim 10 or 11, in which the said processing means (20) are arranged to cause the sequential display of enlarged images (I_{MAG}) correlated with the attention elements (IC) selected in succession according to the said priority criterion.

13. System according to Claim 10 or 11, in which the said processing means (20), in the presence of a plurality of attention elements (IC) having the same priority, are arranged to cause the alternating display of enlarged images (I_{MAG}) correlated with the selected attention elements (IC).

14. System according to Claim 11, in which, in the presence of a plurality of attention elements (IC) having the same priority, the position of the elements (IC) with respect to the driver's side is specified as the subordinate prevalence criterion.

15. System according to Claim 11, in which, in the presence of a plurality of attention elements (IC) having the same priority, the distance of the elements (IC) from the vehicle is specified as the subordinate prevalence criterion.

16. System according to Claim 11, in which the order of priority is dynamic.

17. System according to Claim 11, in which the said point (P) of the panoramic image (I_{PAN}) correlated with an attention elements (IC) is a point of the image lying within the shape indicative of the said element (IC).

18. System according to Claim 17, in which the enlargement scale factor is equal to 4.

19. System according to Claim 11, in which the said point (P) of the panoramic image (I_{PAN}) correlated with an attention element (IC) is calculated by means of a mathematical relation with another point of the image correlated with another attention element (IC) having equal priority.

20. System according to Claim 19, in which the said mathematical relation is the geometric centre of gravity of the rectangular profile uniting the outlines.

21. System according to Claim 20, in which the enlargement scale factor is equal to 2.

22. System according to any one of the preceding claims, comprising on/off switch means (60) for the automatic display of enlarged images, adapted to switch between a natural vision operating mode and an automatic operating mode.

23. System according to any one of the preceding claims, adapted to detect the velocity of movement of the vehicle and arranged to activate the automatic display of enlarged images when a predetermined velocity threshold of the vehicle is exceeded.

24. System according to Claim 23, in which the said processing means (20) are arranged to cause the display of an enlarged image (I_{MAG}) in which the centre of the local scene is the central point of the panoramic image.

25. Method for processing images and representing to the driver of a vehicle scenes (S) representing the surroundings of a vehicle, particularly the sector in front of the vehicle, detected at infrared wavelengths, comprising the representation to the driver of the vehicle of video images representing the scene (S) detected in the infrared, the said representation including the display of at least one panoramic image (I_{PAN}) and at least one enlarged image (I_{MAG}) of an area (A) of the panoramic image (I_{PAN}) according to a predetermined scale factor, in which the centre of the scene is a point (P) of the panoramic image (I_{PAN}),
**characterized in that** it comprises the operations of:
- recognizing in a scene (S) a list of predetermined shapes indicative of attention elements (IC) ;
- selecting in the scene (S) at least one attention element (IC) **characterized by** one of the said predetermined shapes, and
- causing the display of an enlarged image (I_{MAG}) in which the centre of the local scene is a point (P) of the panoramic image (I_{PAN}) correlated with the said selected attention element (IC).

26. Method according to Claim 25, comprising the control of detector means (10) adapted to detect a scene (S) at infrared wavelengths, in order to acquire an enlarged image in which the centre of the local scene is a point (P) of the panoramic image (I_{PAN}) correlated with the said selected attention element (IC) .

27. Method according to Claim 25, comprising the selection of a portion of the detected scene (S) in which the centre is a point (P) of the panoramic image correlated with the said selected attention element (IC), for conversion to a video image and representation to the driver.

28. Method according to any one of Claims 25 to 27, in which the said attention elements (IC) comprise pedestrians.

29. Method according to Claim 28, in which the shapes indicative of pedestrians comprise outlines which can be inscribed in a rectangular profile of predominantly vertical orientation.

30. Method according to any one of Claims 25 to 27, in which the said attention elements (IC) comprise objects having a negative component of velocity with respect to the velocity of the vehicle.

31. Method according to Claim 30, in which the shapes indicative of the said objects comprise outlines which can be inscribed in a rectangular profile of predominantly horizontal orientation.

32. Method according to any one of Claims 25 to 27, in which the said attention elements (IC) comprise obstacles which lie in, or intersect, the path of the vehicle.

33. Method according to Claim 32, in which the shapes indicative of the said obstacles comprise outlines which can be inscribed in a rectangular profile.

34. Method according to any one of Claims 25 to 27, comprising the classification of the said attention elements (IC), and the selection of one attention element (IC) from a plurality of attention elements (IC) of a single scene (S) on the basis of a predetermined priority criterion.

35. Method according to Claim 34, in which a decreasing priority is assigned to: pedestrians; objects having a negative component of velocity with respect to the velocity of the vehicle; obstacles which lie in, or intersect, the path of the vehicle.

36. Method according to Claim 34 or 35, in which displaying of enlarged images (I_{MAG}) includes the sequential display of enlarged images (I_{MAG}) correlated with the attention elements (IC) selected in succession according to the said priority criterion.

37. Method according to Claim 34 or 35, in which, in the presence of a plurality of attention elements (IC) having the same priority, displaying enlarged images (I_{MAG}) includes the alternating display of enlarged images (I_{MAG}) correlated with the selected attention elements (IC).

38. Method according to Claim 35, in which, in the presence of a plurality of attention elements (IC) having the same priority, the elements (IC) positioned on the driver's side are selected as having the highest priority.

39. Method according to Claim 35, in which, in the presence of a plurality of attention elements (IC) having the same priority, the elements (IC) nearest to the vehicle are selected as having the highest priority.

40. Method according to Claim 35, in which the order of priority is dynamic.

41. Method according to Claim 35, in which the said point (P) of the panoramic image (I_{PAN}) correlated with an attention element (IC) is a point of the image lying within the shape indicative of the said element (IC).

42. Method according to Claim 41, in which the enlargement scale factor is equal to 4.

43. Method according to Claim 35, in which the said point (P) of the panoramic image (I_{PAN}) correlated with an attention element (IC) is calculated by means of a mathematical relation with another point of the image correlated with another attention element (IC) having equal priority.

44. Method according to Claim 43, in which the said mathematical relation is the geometric centre of gravity of the rectangular profile uniting the outlines.

45. Method according to Claim 44, in which the enlargement scale factor is equal to 2.

46. Method according to any one of Claims 25 to 27, comprising the detection of the velocity of movement of the vehicle and the activation of the automatic display of enlarged images when a predetermined velocity threshold of the vehicle is exceeded.

47. Method according to Claim 46, in which the operation of displaying enlarged images (I_{MAG}) includes the display of an enlarged image (I_{MAG}) in which the centre of the local scene is the central point of the panoramic image (I_{PAN}).

48. Night vision system for a vehicle, comprising a system for processing images and representing to the driver of a vehicle scenes (S) representing the surroundings of the vehicle, particularly a sector in front of the vehicle, according to Claims 1 to 24.
